# EUROPÄISCHE PATENTSCHRIFT

(11) **EP 3 237 274 B1**
(45) Veröffentlichungstag und Bekanntmachung des Hinweises auf die Patenterteilung: **07.07.2021**
(21) Anmeldenummer: 15816192.7
(22) Anmeldetag: 22.12.2015
(51) Int. Cl.: B62K 19/04, B62K 19/40, B62M 6/90, B62M 6/40, B62K 19/30

(54) **FAHRRADRAHMEN UND ELEKTROFAHRRAD MIT ENERGIESPEICHER**
BICYCLE FRAME AND ELECTRIC BICYCLE WITH ENERGY ACCUMULATOR
CADRE DE BICYCLETTE ET BICYCLETTE ÉLECTRIQUE AVEC ACCUMULATEUR D'ÉNERGIE

(30) Priorität: 22.12.2014 DE 102014226828
(43) Veröffentlichungstag der Anmeldung: 01.11.2017
(73) Patentinhaber: Biketec AG, 4950 Huttwil (CH)
(72) Erfinder: DURDEVIC, Ivica, 4950 Huttwil (CH); STUDER, Lukas Beat, 4623 Neuendorf (CH); SUTER, Philipp Walter, 6032 Emmen (CH); WÖLK, Timo, 83730 Fischbachau (DE); AFZAL, Omar, 81379 München (DE)
(74) Vertreter: Isarpatent
(86) Internationale Anmeldenummer: PCT/EP2015/080996
(87) Internationale Veröffentlichungsnummer: WO 2016/102579

(56) Entgegenhaltungen:
- EP-A1- 2 230 164
- EP-A1- 2 693 520
- DE-U1-202008 009 933
- JP-A- H1 179 064
- JP-A- 2007 265 855
- None

## Beschreibung

Die vorliegende Erfindung betrifft einen Fahrradrahmen gemäß dem Oberbegriff des Anspruchs 1 sowie ein Elektrofahrrad gemäß dem Oberbegriff des Anspruchs 8.

Elektrofahrräder, beispielsweise Pedelecs oder E-Bikes, erfreuen sich als leicht zu handhabendes, emissionsfreies Fortbewegungsmittel großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder (bspw. Citybikes oder Tourenbikes) und die für den Einsatz im Gelände und speziell auch bergigem Gelände entwickelten E-Mountainbikes (E-MTB) in verschiedenen Ausführungen. Elektrofahrräder bieten die Möglichkeit ohne Überbeanspruchung des Fahrers den Einsatzradius zu vergrößern und die durchschnittliche Fahrgeschwindigkeit zu erhöhen.

Aus dem Stand der Technik sind Elektrofahrräder bekannt, welche an dem Fahrradrahmen montierte Energiespeicher, sogenannte Batteriepacks/Akkupacks aufweisen. Die Batteriepacks sind hierbei in den Fahrradrahmen einsetzbar oder umgreifen diesen abschnittsweise. In den Fahrradrahmen einsetzbare Lösungen führen zu einer verringerten Steifigkeit in diesem Bereich, so dass spezielle konstruktive Verstärkungen des Rahmens erforderlich sind. Batteriepacks, welche den Fahrradrahmen abschnittsweise umgreifen, benötigen relativ viel Bauraum und können dadurch die Handlichkeit verschlechtern sowie eine geringere Agilität verursachen. Bei beiden Varianten ist ferner die Entnahmemöglichkeit des Batteriepacks eingeschränkt, so kann dieser beispielsweise nur nach oben entnommen werden. Auch unter optischen Aspekten können derzeitige Elektrofahrräder insbesondere den Ansprüchen eines Lifestyle-betonten, sportlich ambitionierten Fahrers nicht gerecht werden.

Die DE 20 2008 009933 U beschreibt ein Rahmenrohr für Fahrräder oder Elektroräder, welches aus mindestens zwei Kammern besteht, von denen mindestens eine der Kammern weitestgehend geschlossen sein soll und ungefähr das gleiche Volumen umschließen soll wie ein entsprechendes normales Rahmenrohr und von denen mindestens eine mindestens eine Öffnung besitzen soll.

Die EP 2 230 164 A beschreibt einen Fahrradrahmen, der einen Rohrabschnitt mit einem Innenraum zur Aufnahme mindestens einer Batterieeinheit aufweist, die als Energiequelle für einen elektromotorischen Fahrradantrieb geeignet ist, sowie eine darin einfügbare Batterieeinheit.

Die JP 2007 265855 A beschreibt einen Batteriesatz mit einer Vielzahl von Batterieblöcken, die jeweils aus Batterien in einem Zellenhalter bestehen und Verbindungsmetallplatten, die mit den Endflächenelektroden der Batterien der Batterieblöcke verbunden sind, um die Vielzahl von Batterieblöcken linear zu verbinden und einen Batteriestab zu bilden.

Der Erfindung liegt daher die Aufgabe zugrunde, ein neuartiges Fahrradkonzept bereitzustellen, welches elektrisch unterstützte Mobilität mit den Ansprüchen sportlich und Lifestyle-orientierter Radfahrer in Übereinstimmung bringt.

Diese Aufgabe wird durch einen Fahrradrahmen für ein Elektrofahrrad mit der Merkmalskombination des Anspruchs 1 sowie ein Elektrofahrrad mit der Merkmalskombination des Anspruchs 8 gelöst.

Ein erfindungsgemäßer Fahrradrahmen hat einen Energiespeicher und zumindest einen Rahmenabschnitt, der zur abnehmbaren Halterung des Energiespeichers, im Folgenden als Batteriepack bezeichnet, ausgebildet ist. Erfindungsgemäß weist der zur abnehmbaren Halterung des Energiespeichers ausgebildete Rahmenabschnitt einen bezüglich einer Rahmenmittenebene asymmetrischen Querschnitt auf. Dadurch kann sich der Querschnitt des Energiespeichers mit dem hochsteifen Querschnitt des Rahmenabschnitts zu einem technisch und optisch höchsten Ansprüchen genügenden Gesamtquerschnitt ergänzen. Dadurch wird ferner der Bauraumbedarf minimiert, so dass Handlichkeit und Agilität verbessert sind. Besonders vorteilhaft ist es weiterhin, wenn der asymmetrische Querschnitt eine seitliche Entnahme des Batteriepacks ermöglicht. Nicht zuletzt wirkt das asymmetrische Design untypisch und dadurch ansprechend markenbetont. Das erfindungsgemäße Konzept wird daher auch den Ansprüchen eines lifestyle betonten, sportlich ambitionierten Fahrers gerecht.

Erfindungsgemäß weist der Rahmenabschnitt einen zumindest abschnittsweise etwa L-förmigen Querschnitt auf. Hierbei wird eine äußerst kompakte, homogene Rahmenform erreicht, welche die Festigkeitserfordernisse formschön erfüllt.

Der Querschnitt des Rahmenabschnitts und der Querschnitt des Batteriepacks ergänzen sich erfindungsgemäß zu einem im Wesentlichen rechteckigen Gesamtquerschnitt. Der Querschnitt kann vorzugsweise quaderförmig oder quadratisch sein. Dadurch ist der Bauraumbedarf auf ein Minimum reduziert.

Gemäß eines besonders bevorzugten Ausführungsbeispiels der Erfindung ist das Unterrohr zur Halterung des Energiespeichers ausgebildet. Der Rahmenabschnitt kann zur Halterung des Energiespeichers etwa mittig des Unterrohrs zwischen Tretlager und Lenkkopflager vorgesehen sein. Bei einer Variante mit Tretlagerantrieb (bspw. einer Motor-Getriebe-Einheit) kann sich der Energiespeicher bis in einen Bereich der Tretlagerantriebsaufnahme hin erstrecken. Optisch ansprechend kann der Energiespeicher bei dieser Ausführung im unteren Endbereich des Unterrohrs angeordnet sein. Dadurch wird insgesamt ein möglichst tiefer Schwerpunkt des Fahrrads mit optimiertem Fahrverhalten erreicht.

Als besonders Vorteilhaft hat es sich erwiesen, wenn das Batteriepack zumindest abschnittsweise einen bezüglich einer Energiespeichermittenebene asymmetrischen Querschnitt aufweist. Dadurch wird eine hochintegrierte Interaktion zwischen Rahmenabschnitt und Energiespeicher erreicht.

Bei einem Ausführungsbeispiel begrenzen Rahmenabschnitt und Batteriepack eine im Wesentlichen diagonale Teilungsebene. Hierbei ist eine große Auflagefläche gegeben. Das Batteriepack kann vorteilhafterweise zu einer Seite des Fahrradrahmens hin, d.h. seitlich, entnommen werden.

Bei einem bevorzugten Fahrradrahmen ist das Batteriepack oberhalb des Rahmenabschnitts angeordnet. Dadurch ist das Batteriepack vom Benutzer leicht von oben einsetz- und im Rahmen verriegelbar. Das heißt, das Batteriepack ist vorzugsweise von oben auf den Rahmenabschnitt aufgesetzt. Mit dieser Anordnung wird ferner ein bestmöglicher Schutz des Batteriepacks vor Beschädigungen, beispielsweise durch Steinschlag oder Bodenberührungen, erreicht.

Das Batteriepack ist hierbei vorzugsweise geschützt oberhalb des Rahmenabschnitts angeordnet. Das Batteriepack kann den Rahmenabschnitt kompakt und formschön ergänzen. Der Rahmenabschnitt und der Energiespeicher begrenzen eine im Wesentlichen diagonale Teilungsebene, welche sich bei einem Ausführungsbeispiel von links unten nach rechts oben des Querschnitts erstreckt. Besonders bevorzugt ergänzen sich Energiespeicher und Rahmenabschnitt zu einem rechteckigen Querschnitt. Der Querschnitt kann hierbei quadratisch sein.

Entsprechend ist es vorteilhaft, wenn das Batteriepack ebenfalls einen zumindest abschnittsweise L-förmigen Querschnitt aufweist. Das Batteriepack kann zumindest einen abgerundeten Eckenbereich aufweisen. Bei einem bevorzugten Ausführungsbeispiel sind alle Eckenbereiche abgerundet.

Bei einer zweiten, nicht erfindungsgemäßen Variante des Fahrradrahmens ist der Rahmenabschnitt mit einem zumindest abschnittsweise stufenförmigen Querschnitt vorgesehen. Vorzugsweise ist das Batteriepack bei dieser Variante ebenfalls zumindest abschnittsweise L-förmig. Die Teilungsebene ist bei diesem Ausführungsbeispiel stufenförmig. Bei dieser Variante wird ebenfalls eine kompakte, homogene Rahmenform erreicht. Der Rahmenabschnitt weist insbesondere eine einzige Stufe auf.

Das Batteriepack kann derart dimensioniert sein, dass es im Bereich des Rahmenabschnitts etwa bündig mit der Rahmenoberseite des Unterrohrs abschließt. Der Rahmenabschnitt und das Batteriepack begrenzen eine im Wesentlichen diagonale Teilungsebene, welche sich von links unten nach rechts oben des Querschnitts stufenförmig erstreckt. Besonders bevorzugt ergänzen sich Batteriepack und Rahmenabschnitt zu einem rechteckigen Querschnitt. Der Querschnitt kann hierbei quadratisch sein.

Bei einer dritten, nicht erfindungsgemäßen Variante des Fahrradrahmens ist der Rahmenabschnitt mit einem zumindest abschnittsweise polygonförmigen Querschnitt ausgebildet. Der Rahmenabschnitt hat vorzugsweise eine einen stumpfen Auflagewinkel einschließende Auflagefläche für das Batteriepack.

Bei einem besonders bevorzugten Ausführungsbeispiel weist der Rahmenabschnitt einen etwa dreieckigen Querschnitt mit zwei einen Auflagewinkel einschließenden Auflageflächen für das Batteriepack auf. Die Auflageflächen bilden insbesondere einen etwa mittig angeordneten V-förmigen Sattel aus, dessen Scheitelpunkt von der dreieckigen Grundfläche nach außen ragt. Dadurch ist eine zentrierte Batteriepackhalterung hoher Festigkeit gegeben. Bei dieser Variante wird ebenfalls eine kompakte, homogene Rahmenform erreicht.

Bei einer vierten, nicht erfindungsgemäßen Variante hat der Rahmenabschnitt eines Fahrradrahmens eine diagonal geneigte, etwa W-förmige Rahmenstützfläche für eine ebenfalls etwa W-förmige Energiespeicherstützfläche.

Die Rahmenstützfläche kann aus einer etwa horizontalen Stützfläche und einer etwa senkrechten Stützfläche bestehen, welche über zwei nach außen geneigte Sattelflächen verbunden sind, welche einen mittigen Scheitel definieren. Das Batteriepack weist vorzugsweise einen entsprechenden Scheitelwinkel auf.

Der Rahmenabschnitt kann hierbei eine facettierte Unterseite mit einer Horizontalaußenfläche und einer Vertikalaußenfläche aufweisen, welche über eine Schrägaußenfläche verbunden sind. Rahmenabschnitt und Batteriepack können abgerundete Eckenbereiche aufweisen.

Gemäß einer fünften, nicht erfindungsgemäßen Variante des Fahrradrahmens weist der Rahmenabschnitt einen zumindest abschnittsweise dreieckigen Querschnitt auf. Der Rahmenabschnitt und das Batteriepack begrenzen hierbei vorzugsweise eine im Wesentlichen diagonale Teilungsebene, welche sich von links unten nach rechts oben des Querschnitts erstrecken kann. Energiespeicher und Rahmenabschnitt ergänzen sich zu einem Viereck.

Besonders bevorzugt ergänzen sich Energiespeicher und Rahmenabschnitt zu einem rechteckigen Querschnitt. Der Querschnitt kann hierbei quadratisch sein. Der Energiespeicher ragt im Bereich des Rahmenabschnitts über die Rahmenoberseite des Unterrohrs nach oben hinaus.

Als vorteilhaft hat es sich bei dieser Variante erwiesen, wenn das Batteriepack einen zumindest abschnittsweise dreieckigen Querschnitt aufweist. Die längere Dreieckseite kann als Anlagefläche dienen. Insgesamt wird bei dieser Variante eine kompakte, homogene Rahmenform höchster Festigkeit erreicht.

Ein erfindungsgemäßes Elektrofahrrad hat einen Fahrradrahmen mit einem Energiespeicher, insbesondere einem Batteriepack, und zumindest einem Rahmenabschnitt, der zur abnehmbaren Halterung des Energiespeichers ausgebildet ist. Erfindungsgemäß hat der zur abnehmbaren Halterung des Energiespeichers ausgebildete Rahmenabschnitt einen bezüglich einer Rahmenmittenebene asymmetrischen Querschnitt. Der Rahmenabschnitt weist einen zumindest abschnittsweise etwa L-förmigen Querschnitt auf. Der Querschnitt des Rahmenabschnitts und der Querschnitt des Batteriepacks ergänzen sich zu einem im Wesentlichen rechteckigen Gesamtquerschnitt. Das Elektrofahrrad hat dadurch einen optimierten Rahmenquerschnitt mit konstruktiv und ästhetisch besten Eigenschaften bei minimiertem Bauraumbedarf.

Ein nicht erfindungsgemäßer Energiespeicher, insbesondere ein Batteriepack, hat ein Batteriegehäuse zum Einsetzen in den hierfür ausgebildeten Rahmenabschnitt des Fahrradrahmens. Erfindungsgemäß weist der Energiespeicher einen bezüglich einer Energiespeichermittenebene bzw. Gehäusemittenebene des Gehäuses asymmetrischen Querschnitt auf. Das Batteriegehäuse weist zumindest eine Befestigungseinrichtung, wie exemplarisch Rastmittel, und/oder mindestens eine Ausnehmung für eine Befestigungseinrichtung auf.

Das Batteriepack hat ein Batteriegehäuse, insbesondere aus Kunststoff und mit feuchtigkeitsdichtem Aufbau, das zur sicheren Anbringung im vorgeschlagenen Fahrradrahmen ausgebildet ist, also hierzu geeignete Befestigungsmittel oder aber Öffnungen zum Eingriff von am Rahmen vorgesehenen Befestigungsmitteln aufweist. Zur Erleichterung eines Nachladens oder eines Austauschs sind die Befestigungsmittel bevorzugt Rastmittel, wie Schnapp- oder Riegelverschlüsse, alternativ können aber auch leicht handhabbare Schraubverbindungen etc. eingesetzt werden.

Gemäß einem nicht erfindungsgemäßen Ausführungsbeispiel ist ein Satz von Energiespeichern, beispielsweise als Batteriepacks mit unterschiedlicher Speicherkapazität in den Fahrradrahmen einsetzbar. Die Batteriepacks können hierbei trotz unterschiedlicher Speicherkapazität in den Rahmen einsetzbare Anschlussmaße aufweisen. Dadurch sind die Batteriepacks einfach in den Fahrradrahmen einsetzbar und können dort fixiert werden.

Der Energiespeicher kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Da sich das erfindungsgemäße Fahrrad äußerlich kaum von sonstigen modern und sportlich gestalteten Rädern abhebt, wird die Konstruktion dem sportlichen und Lifestyle-Anspruch breiter Nutzergruppen gerecht. Die mögliche unauffällige Integration des Elektroantriebkonzepts ist formschön.

Weitere bevorzugte Ausführungsformen sind Gegenstand der Unteransprüche.

Im Folgenden werden bevorzugte Ausführungsformen der vorliegenden Erfindung unter Bezugnahme auf die beiliegenden Zeichnungen näher erläutert. Dabei zeigen die Zeichnungen im Einzelnen:
Figur 1a eine Seitenansicht eines erfindungsgemäßen Fahrradrahmens,
Figur 1b die zweite Seitenansicht des Fahrradrahmens aus Figur 1a,
Figur 2a eine Schnittdarstellung entlang der Linie C-D aus Figur 1a,
Figur 2b eine Schnittdarstellung entlang der Linie A-B aus Figur 1a,
Figur 2c eine Schnittdarstellung entlang der Linie E-F aus Figur 1a,
Figur 3a eine Seitenansicht eines nicht erfindungsgemäßen Fahrradrahmens mit Tretlagermotoraufnahme,
Figur 3b die zweite Seitenansicht des Fahrradrahmens aus Figur 3a,
Figur 4a eine Seitenansicht eines Fahrradrahmens gemäß eines weiteren nicht erfindungsgemäßen Ausführungsbeispiels,
Figur 4b die zweite Seitenansicht des Fahrradrahmens aus Figur 4a,
Figur 5a eine Schnittdarstellung entlang der Linie C-D aus Figur 4a,
Figur 5b eine Schnittdarstellung entlang der Linie A-B aus Figur 4a,
Figur 5c eine Schnittdarstellung entlang der Linie E-F aus Figur 4a,
Figur 6a eine Seitenansicht eines Fahrradrahmens mit Tretlagermotoraufnahme gemäß eines weiteren nicht erfindungsgemäßen Ausführungsbeispiels,
Figur 6b die zweite Seitenansicht des Fahrradrahmens aus Figur 6a,
Figur 7a eine alternative Schnittdarstellung entlang der Linie C-D aus Figur 1a,
Figur 7b eine alternative Schnittdarstellung entlang der Linie A-B aus Figur 1a,
Figur 7c eine alternative Schnittdarstellung entlang der Linie E-F aus Figur 1a,
Figur 8a eine alternative Schnittdarstellung entlang der Linie C-D aus Figur 4a,
Figur 8b eine alternative Schnittdarstellung entlang der Linie A-B aus Figur 4a,
Figur 8c eine alternative Schnittdarstellung entlang der Linie E-F aus Figur 4a,
Figur 9a eine Seitenansicht eines nicht erfindungsgemäßen Fahrradrahmens,
Figur 9b die zweite Seitenansicht des Fahrradrahmens aus Figur 9a,
Figur 10a eine Schnittdarstellung entlang der Linie C-D aus Figur 9a,
Figur 10b eine Schnittdarstellung entlang der Linie A-B aus Figur 9a und
Figur 10c eine Schnittdarstellung entlang der Linie E-F aus Figur 9a.

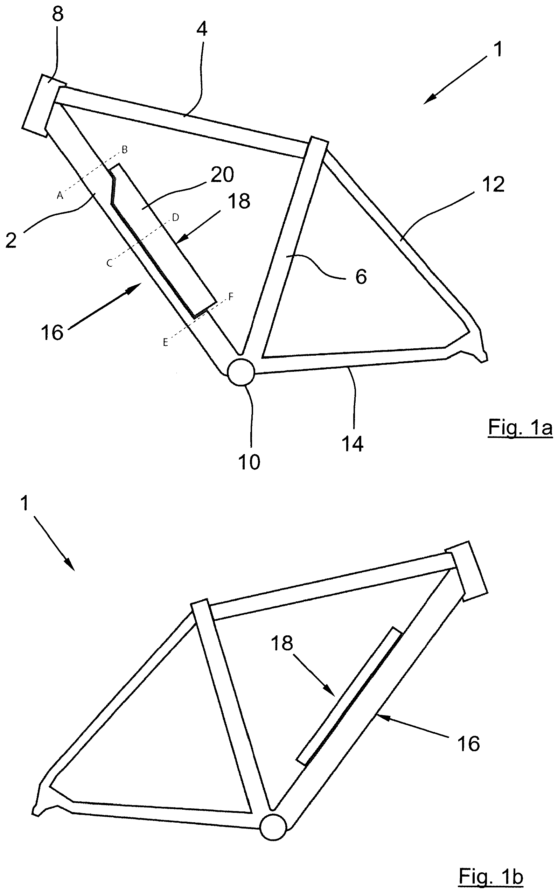

Figur 1a zeigt eine Seitenansicht eines exemplarisch als Diamantrahmen ausgebildeten erfindungsgemäßen Fahrradrahmens 1 mit einem Unterrohr 2, einem Oberrohr 4, einem Sattelrohr 6, einem Steuerrohr 8, einem Tretlagergehäuse 10 sowie Sattelstreben 12 und Unterstreben 14.

Der erfindungsgemäße Fahrradrahmen 1 hat einen Rahmenabschnitt 16, der zur abnehmbaren Halterung eines als Batteriepack 18 mit Batteriegehäuse 20 ausgebildeten separaten Energiespeichers ausgebildet ist. Der Rahmenabschnitt 16 zur Halterung des Batteriepacks 18 ist etwas unterhalb der Mitte des Unterohrs 2 zwischen Tretlagergehäuse 10 und Steuerrohr 8 vorgesehen. Das Batteriepack 18 ist oberhalb des Rahmenabschnitts 16 angeordnet. Dadurch ist das Batteriepack 18 vom Benutzer leicht von oben einsetz- und im Rahmen 1 verriegelbar. Das heißt, das Batteriepack 18 ist von oben auf den Rahmenabschnitt 16 aufgesetzt. Mit dieser Anordnung wird ein bestmöglicher Schutz des Batteriepacks 18 vor Beschädigungen, beispielsweise durch Steinschlag oder Bodenberührungen, erreicht. Der Rahmenabschnitt 16 hat einen geneigt verlaufenden Endbereich. Dieser geneigte Endbereich ist vorzugsweise im oberen Rohrbereich vorgesehen. Die Neigung ist derart gewählt, dass sich diese im Wesentlichen senkrecht erstreckt.

Figur 1b zeigt die zweite Seitenansicht des Fahrradrahmens 1 aus Figur 1a. Gemäß den Figuren 1a und 1b ragt das Batteriepack 18 im Bereich des Rahmenabschnitts 16 über die Rahmenoberseite des Unterrohrs 2 nach oben hinaus.

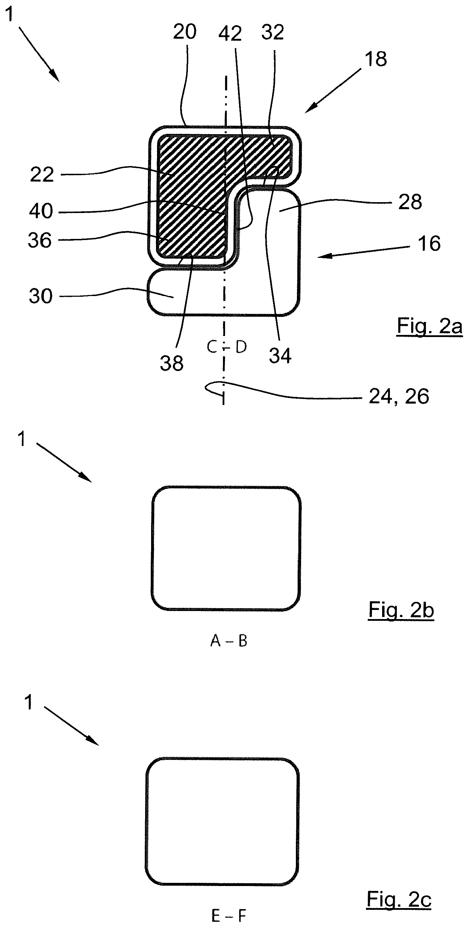

Wie insbesondere Figur 2a zu entnehmen ist, welche eine Schnittdarstellung entlang der Linie C-D aus Figur 1a zeigt, weist der zur abnehmbaren Halterung des Batteriepacks 18 ausgebildete Rahmenabschnitt 16 des Fahrradrahmens 1 einen bezüglich einer Rahmenmittenebene 24 asymmetrischen Querschnitt auf. Das Batteriepack 18 mit Batteriegehäuse 20 und innenliegenden, schematisch dargestellten Batteriezellen 22 hat einen bezüglich einer Energiespeichermittenebene 26 asymmetrischen Querschnitt, wobei die Rahmenmittenebene 24 und die Energiespeichermittenebene 26 in einer gemeinsamen Ebene angeordnet sind. Dadurch kann sich der Querschnitt des Batteriepacks 18 mit dem hochsteifen Querschnitt des Rahmenabschnitts 16 zu einem technisch und optisch höchsten Ansprüchen genügenden Gesamtquerschnitt ergänzen. Der Bauraumbedarf ist minimiert, so dass Handlichkeit und Agilität verbessert sind. Ferner ist eine optimierte Interaktion zwischen Rahmenabschnitt 16 und Batteriepack 18 erreicht. Das Batteriepack 18 kann wahlweise nach oben oder zu einer Seite des Fahrradrahmens hin, d.h. seitlich, entnommen bzw. eingesetzt werden. Dadurch ist eine verbesserte Handhabung des Batteriepacks 18 ermöglicht.

Gemäß dieser ersten erfindungsgemäßen Variante des Fahrradrahmens 1 weist der Rahmenabschnitt 16 einen etwa L-förmigen Querschnitt auf. Hierbei ist ein vertikaler Schenkel 28 des Rahmenabschnitts 16 rechtwinklig zu einem horizontalen Schenkel 30 angeordnet. Die Schenkel 28, 30 weisen eine im Wesentlichen rechteckige Grundform mit abgerundeten Eckenbereichen auf. Entsprechend hat das Batteriepack 18 ebenfalls einen etwa L-förmigen Querschnitt mit abgerundeten Eckenbereichen.

Eine obere Anlagefläche 32 des Batteriepacks 18 liegt auf einer oberen Auflagefläche 34 des Rahmenabschnitts 16 auf. Eine untere Anlagefläche 36 des Batteriepacks 18 liegt auf einer unteren Auflagefläche 38 des Rahmenabschnitts 16 auf. Die untere Auflagefläche 38 des Rahmenabschnitts 16 ist breiter als die obere Auflagefläche 34. Die untere Auflagefläche 38 des Rahmenabschnitts 16 ist in der Figur links angeordnet. Die obere Anlagefläche 32 des Batteriepacks 18 ist über eine Seitenwandung 40 mit der unteren Anlagefläche 36 verbunden, wobei sich die Seitenwandung 40 rechtwinklig zu den Anlageflächen 32, 36 erstreckt.

Die obere Auflagefläche 34 des Rahmenabschnitts 16 ist über eine Seitenwand 42 mit der unteren Auflagefläche 38 verbunden, wobei sich die Seitenwand 42 rechtwinklig zu den Auflageflächen 34, 38 erstreckt.

Der Rahmenabschnitt 16 und das Batteriepack 18 begrenzen dadurch eine im Wesentlichen stufenförmige, diagonale Teilungsebene, welche sich von links unten nach rechts oben des Querschnitts erstreckt. Batteriepack 18 und Rahmenabschnitt 16 ergänzen sich zu einem rechteckigen Gesamtquerschnitt. Der Querschnitt ist hierbei quadratisch oder angenähert quadratisch.

Hierbei wird eine äußerst kompakte, homogene Rahmenform erreicht, welche die Festigkeitsanforderungen formschön erfüllt.

Wie die Figuren 2b und 2c zeigen, welche eine Schnittdarstellung entlang der Linie A-B bzw. entlang der Linie E-F aus Figur 1a betreffen, hat der Rahmen oberhalb und unterhalb des Rahmenabschnitt 16 einen im Wesentlichen rechteckigen Querschnitt. Die Außenabmessungen des Querschnitts entsprechen etwa den Außenabmessungen des Rahmenabschnitts 16.

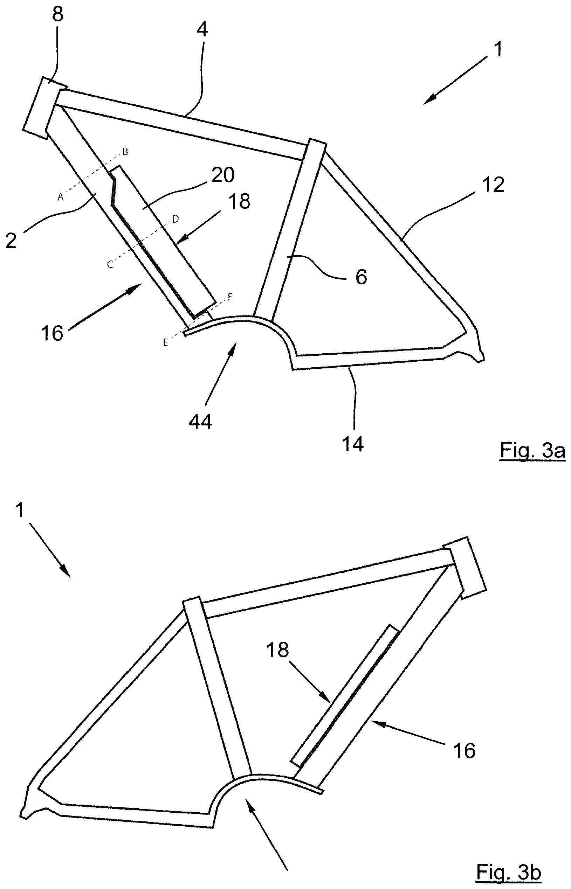

Die Figuren 3a und 3b zeigen Seitenansichten einer erfindungsgemäßen Variante mit einer konkav gekrümmten Tretlagerantriebsaufnahme 44 für einen nicht dargestellten Tretlagerantrieb, beispielsweise einer Motor-GetriebeEinheit. Hierbei erstreckt sich das Batteriepack 18 bis in einen Bereich der Tretlagerantriebsaufnahme 44 hin. Optisch ansprechend und optimiert für einen tiefen Gesamtschwerpunkt ist das Batteriepack 18 bei dieser Ausführung im unteren Endbereich des Unterrohrs angeordnet. Die Querschnitte des Fahrradrahmens entsprechen den Querschnitten gemäß den Figuren 2a bis 2c.

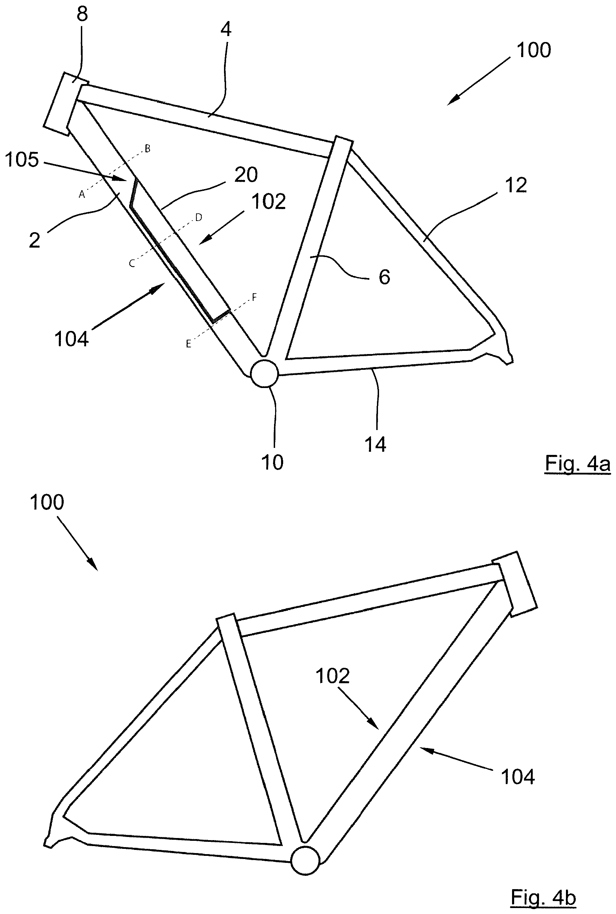

Bei einer weiteren Variante gemäß der Figuren 4a und 4b eines erfindungsgemäßen Fahrradrahmens 100 ist zur Aufnahme eines Batteriepacks 102 ein Rahmenabschnitt 104 vorgesehen. Das Batteriepack 102 ist bündig in dem Rahmenabschnitt 104 aufgenommen. Der Rahmenabschnitt 104 hat einen geneigt verlaufenden Endbereich 105. Dieser geneigte Endbereich 105 ist vorzugsweise im oberen Rohrbereich vorgesehen. Die Neigung ist derart gewählt, dass sich diese im Wesentlichen senkrecht erstreckt.

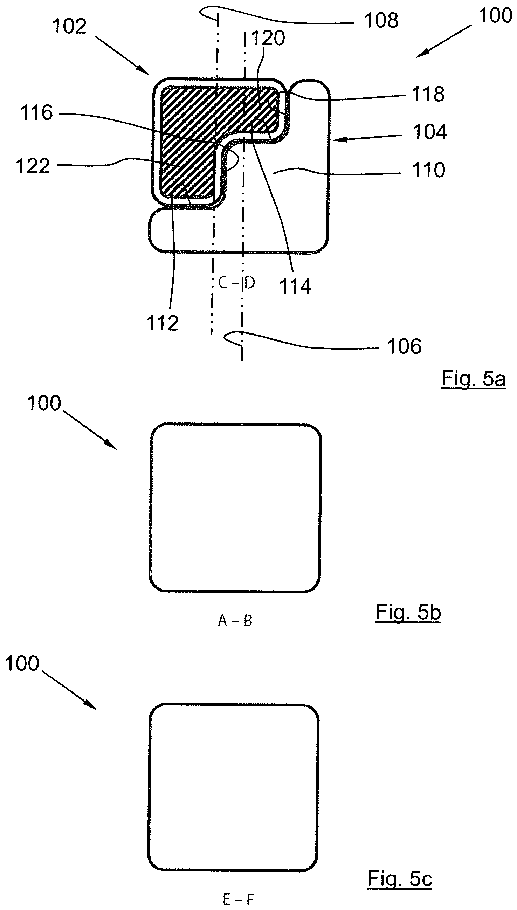

Wie Figur 5a zu entnehmen ist, welche eine Schnittdarstellung entlang der Linie C-D aus Figur 4a zeigt, weist der zur abnehmbaren Halterung des Batteriepacks 102 ausgebildete Rahmenabschnitt 104 des Fahrradrahmens 100 einen bezüglich einer senkrechten Rahmenmittenebene 106 asymmetrischen Querschnitt auf.

Das Batteriepack 102 hat einen bezüglich einer Energiespeichermittenebene 108 asymmetrischen Querschnitt, wobei die Rahmenmittenebene 106 rechts versetzt von der Energiespeichermittenebene 108 angeordnet ist. Das Batteriepack 102 ist bei dieser Variante ebenfalls zumindest abschnittsweise L-förmig. Der Rahmenabschnitt 104 ist mit einem stufenförmigen Querschnitt vorgesehen. Die Teilungsebene ist bei diesem Ausführungsbeispiel diagonal und stufenförmig.

Der Rahmenabschnitt 104 weist eine Stufe 110 mit einer ersten in der Figur horizontalen Auflagefläche 112 und einer zweiten in der Figur horizontalen Auflagefläche 114 sowie einer ersten in der Figur senkrechten Wandfläche 116 und einer zweiten in der Figur senkrechten Wandfläche 118 auf. Die Auflageflächen 112, 114 sind rechtwinklig zu den Wandflächen 116, 118 angeordnet. Das Batteriepack 102 hat einen horizontalen ersten Schenkel 120 und einen sich rechtwinklig zu diesem erstreckenden vertikalen zweiten Schenkel 122. Die Schenkel 120, 122 sind etwa gleich lang. Der zweite Schenkel 122 ist gegenüber dem ersten Schenkel 120 breiter ausgeführt.

Der Rahmenabschnitt 104 und das Batteriepack 102 begrenzen eine im Wesentlichen diagonale Teilungsebene, welche sich von links unten nach rechts oben des Querschnitts erstreckt. Das Batteriepack 102 schließt im Bereich des Rahmenabschnitts 104 etwa bündig mit der Rahmenoberseite des Unterrohrs ab. Rahmenabschnitt 104 und Batteriepack 102 weisen abgerundete Eckenbereiche auf. Batteriepack 102 und Rahmenabschnitt 104 ergänzen sich zu einem rechteckigen Querschnitt. Der Querschnitt kann hierbei quadratisch sein. Bei dieser Variante wird ebenfalls eine kompakte, homogene Rahmenform erreicht. Das Batteriepack 102 kann wahlweise nach oben oder zu einer Seite des Fahrradrahmens hin entnommen bzw. eingesetzt werden. Dadurch ist eine verbesserte Handhabung ermöglicht.

Wie die Figuren 5b und 5c zeigen, welche eine Schnittdarstellung entlang der Linie A-B bzw. entlang der Linie E-F aus Figur 4a betreffen, hat der Rahmen 100 oberhalb und unterhalb des Rahmenabschnitts einen im Wesentlichen quadratischen Querschnitt gleicher Höhe und Breite. Die Außenabmessungen des Querschnitts entsprechen etwa den Außenabmessungen des Rahmenabschnitts 104.

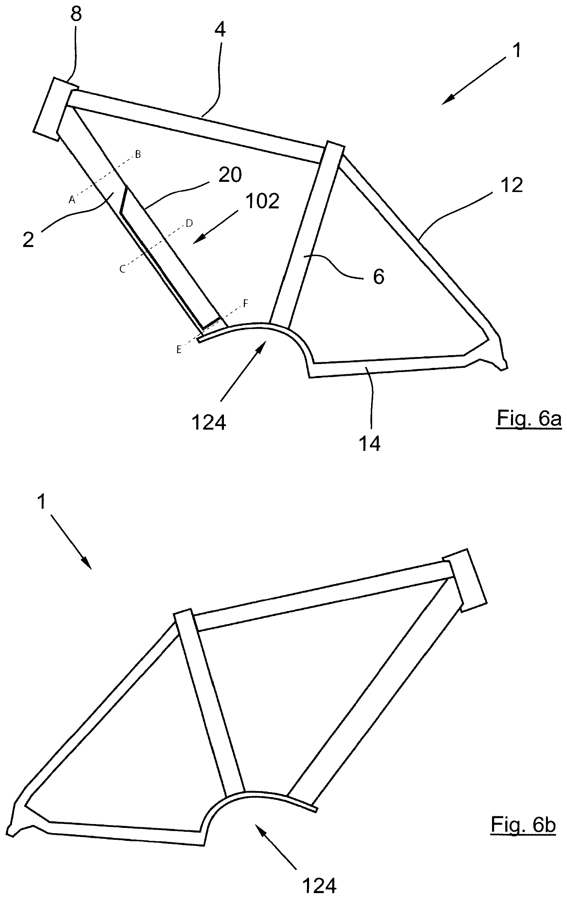

Die Figuren 6a und 6b zeigen Seitenansichten einer Variante mit einer konkav gekrümmten Tretlagerantriebsaufnahme 124 für einen nicht dargestellten Tretlagerantrieb, beispielsweise einer Motor-GetriebeEinheit. Hierbei erstreckt sich das Batteriepack 102 bis in einen Bereich der Tretlagerantriebsaufnahme 124 hin. Optisch ansprechend und optimiert für einen tiefen Gesamtschwerpunkt ist das Batteriepack 102 bei dieser Ausführung im unteren Endbereich des Unterrohrs angeordnet. Die Querschnitte des Fahrradrahmens können den Querschnitten gemäß den Figuren 5a bis 5c entsprechen.

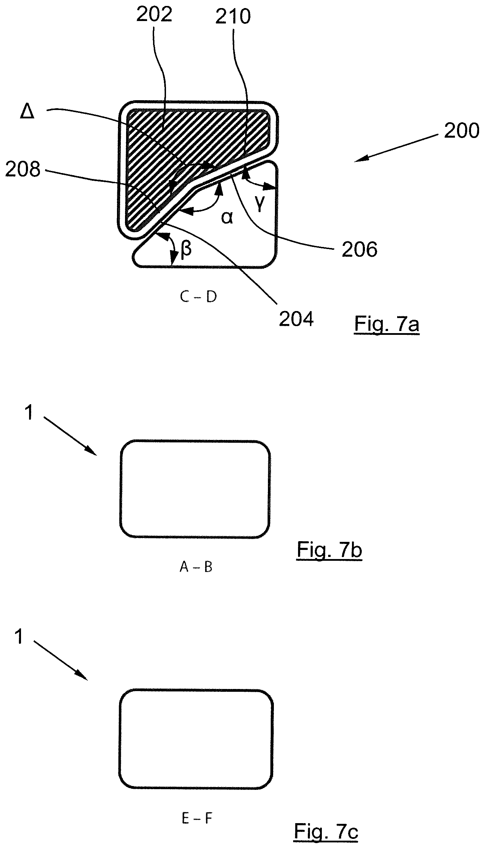

Bei einer alternativen Variante eines erfindungsgemäßen Fahrradrahmens gemäß den Figuren 1a und 1b ist ein Rahmenabschnitt 200 zur Aufnahme eines Batteriepacks 202 mit einem polygonförmigen Querschnitt ausgebildet, wie der Figur 7a zu entnehmen ist. Der Rahmenabschnitt 200 hat einen angenähert etwa dreieckigen Querschnitt mit zwei einen Auflagewinkel α einschließenden Auflageflächen 204, 206 für das Batteriepack 202. Die Auflageflächen 204, 206 bilden einen etwa mittig angeordneten V-förmigen Sattel aus, dessen Scheitelpunkt von der dreieckigen Grundfläche nach außen ragt. Der Betrag des Auflagewinkels α liegt vorzugsweise im Bereich von etwa 120° bis 170°. Im dargestellten besonders vorteilhaften Ausführungsbeispiel hat der Auflagewinkel α etwa 160°. Ein erster Rahmenabschnittswinkel β liegt im Bereich von etwa 30° bis 70°. Im dargestellten besonders vorteilhaften Ausführungsbeispiel hat der Rahmenabschnittswinkel β etwa 45°. Ein zweiter Rahmenabschnittswinkel γ liegt im Bereich von etwa 30° bis 80°. Im dargestellten besonders vorteilhaften Ausführungsbeispiel hat der Rahmenabschnittswinkel γ etwa 65°.

Das Batteriepack 202 hat entsprechend zwei einen Anlagewinkel Δ einschließende Anlageflächen 208, 210 zum Rahmenabschnitt hin. Die Anlageflächen 208, 210 bilden einen etwa mittig angeordnete konkave Tiefstelle aus, dessen Scheitelpunkt nach innen ragt. Die Winkelbereiche sind an die Rahmenabschnittswinkel angepasst. Der Rahmenabschnitt 200 und das Batteriepack 202 begrenzen daher eine im Wesentlichen diagonale Teilungsebene, welche sich von links unten nach rechts oben des Querschnitts erstreckt.

Das Batteriepack 202 ist oberhalb des Rahmenabschnitts 200 angeordnet und liegt auf diesem auf. Das Batteriepack 202 ergänzt den Rahmenabschnitt 200 zu einem kompakten, quaderförmigen Querschnitt. Das Batteriepack 202 kann wahlweise nach oben oder zu einer Seite des Fahrradrahmens hin entnommen bzw. eingesetzt werden.

Wie die Figuren 7b und 7c zeigen, welche eine alternative Schnittdarstellung entlang der Linie A-B bzw. entlang der Linie E-F aus Figur 1a betreffen, hat der Rahmen bei dieser Variante oberhalb und unterhalb des Rahmenabschnitts 200 einen im Wesentlichen rechteckigen Querschnitt. Die Breite des Rahmens ist hierbei größer als dessen Höhe.

Ähnlich der Figuren 3a, 3b kann der Fahrradrahmen auch bei dieser Querschnittsvariante mit einer konkav gekrümmten Tretlagerantriebsaufnahme versehen sein. Die Querschnitte des Fahrradrahmens entsprechen den Querschnitten gemäß den Figuren 7a bis 7c.

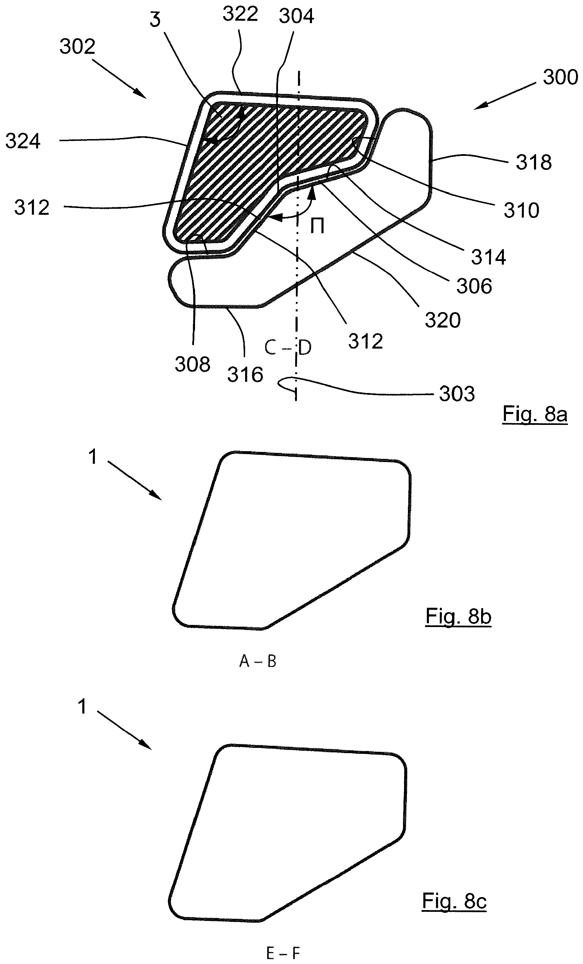

Bei einer weiteren alternativen Variante eines erfindungsgemäßen Fahrradrahmens gemäß den Figuren 4a und 4b ist ein Rahmenabschnitt 300 zur Aufnahme eines Batteriepacks 302 mit einem etwa W-förmigen Querschnitt ausgebildet, wie der Figur 8a zu entnehmen ist. Der bezüglich seiner Rahmenmittenebene 303 asymmetrische Rahmenabschnitt 300 hat eine diagonal geneigte, etwa W-förmige Rahmenstützfläche 304 für eine ebenfalls etwa W-förmige Energiespeicherstützfläche 306.

Die Rahmenstützfläche 304 besteht aus einer etwa horizontalen Stützfläche 308 und einer etwa senkrechten Stützfläche 310, welche über zwei nach außen geneigte Sattelflächen 312, 314 verbunden sind, welche einen mittigen Scheitel definieren. Der Scheitelwinkel Π liegt im Bereich von etwa 90° bis 170°. Vorzugsweise bei etwa 150°. Das Batteriepack 302 weist einen entsprechenden Scheitelwinkel auf.

Der Rahmenabschnitt 300 hat eine facettierte Unterseite mit einer in der Figur horizontalen ersten Außenfläche 316 und eine in der Figur etwa vertikale Außenfläche 318, welche über eine Schrägaußenfläche 320 verbunden sind. Die Schrägaußenfläche 320 erstreckt sich von links unten nach rechts oben bezüglich des Rahmenquerschnitts. Sie hat einen Neigungswinkel von etwa 10° bis 70°, vorzugsweise von 30°.

Das Batteriepack 302 hat eine obere Außenfläche 322 und eine seitliche Außenfläche 324, welche einen Winkel 3 von etwa 60 bis 140°, vorzugsweise von etwa 100° einschließen. Hierbei ist ebenfalls eine seitliche Entnehmbarkeit des Batteriepacks 320 ermöglicht. Rahmenabschnitt 300 und Batteriepack 320 weisen abgerundete Eckenbereiche auf. Das Batteriepack 302 schließt im Bereich des Rahmenabschnitts etwa bündig mit der Rahmenoberseite des Unterrohrs ab.

Wie die Figuren 8b und 8c zeigen, welche eine alternative Schnittdarstellung entlang der Linie A-B bzw. entlang der Linie E-F aus Figur 4a betreffen, hat der Rahmen oberhalb und unterhalb des Rahmenabschnitts einen Querschnitt und Abmessungen, welche dem Gesamtquerschnitt gemäß Figur 8a entsprechen.

Ähnlich der Figuren 6a, 6b kann der Fahrradrahmen auch bei dieser Querschnittsvariante mit einer konkav gekrümmten Tretlagerantriebsaufnahme versehen sein. Die Querschnitte des Fahrradrahmens entsprechen den Querschnitten gemäß den Figuren 8a bis 8c.

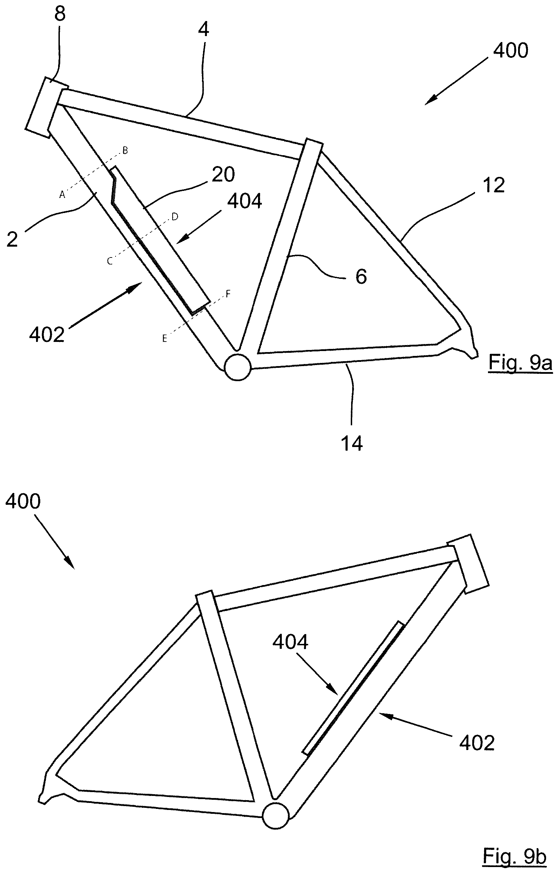

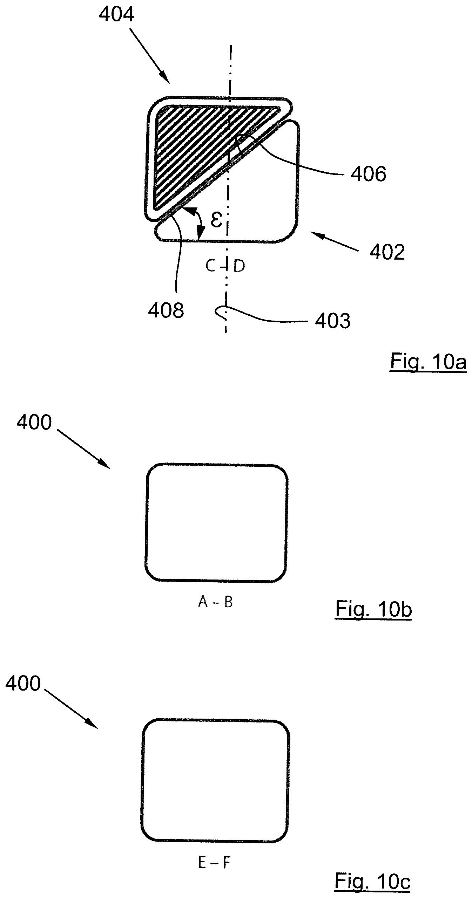

In den Figuren 9a und 9b ist eine letzte Variante eines erfindungsgemäß besonders bevorzugten Fahrradrahmens 400 dargestellt. Wie Figur 10a zu entnehmen ist, welche eine Querschnittsdarstellung entlang der Linie C-D aus Figur 9a zeigt, hat der Rahmenabschnitt 402 einen bezüglich seiner Rahmenmittenebene 403 asymmetrischen, etwa dreieckigen Querschnitt in Form eines rechtwinkligen Dreiecks.

Der Rahmenabschnitt 402 und das Batteriepack 404 begrenzen hierbei eine diagonale Teilungsebene 406, welche sich von links unten nach rechts oben des Querschnitts erstreckt. Die längere Dreieckseite dient als Auflagefläche 408. Die Auflagefläche 408 hat einen Neigungswinkel ε im Bereich von etwa 20° bis 70°, vorzugsweise von etwa 40°. Batteriepack 404 und Rahmenabschnitt 402 ergänzen sich hierbei zu einem angenäherten Quadrat. Insgesamt wird auch bei dieser Variante eine kompakte, homogene Rahmenform höchster Festigkeit erreicht. Das Batteriepack 404 ragt im Bereich des Rahmenabschnitts 402 über die Rahmenoberseite des Unterrohrs nach oben leicht hinaus.

Das Batteriepack 404 liegt von oben auf dem Rahmenabschnitt 402 auf und hat einen entsprechenden dreieckigen Querschnitt in Form eines rechtwinkligen Dreiecks. Die längere Dreieckseite dient als Anlagefläche. Die Anlagefläche hat einen dem Rahmenabschnitt entsprechenden Neigungswinkel im Bereich von etwa 20° bis 70°, vorzugsweise von etwa 40°. Das Batteriepack 404 ist hierbei wahlweise nach oben oder zu einer Seite des Fahrradrahmens hin entnehmbar, so dass eine ergonomische Handhabung ermöglicht ist.

Die Ausführung der Erfindung ist nicht auf die in den Figuren gezeigten und oben erläuterten Beispiele beschränkt, sondern ebenso in einer Vielzahl von Abwandlungen eines Fachmanns möglich.

### Bezugszeichenliste

- 1: Fahrradrahmen
- 2: Unterrohr
- 4: Oberrohr
- 6: Sattelrohr
- 8: Steuerrohr
- 10: Tretlagergehäuse
- 12: Sattelstrebe
- 14: Unterstrebe
- 16: Rahmenabschnitt
- 18: Batteriepack
- 20: Batteriegehäuse
- 22: Batteriezellen
- 24: Rahmenmittenebene
- 26: Energiespeichermittenebene
- 28: vertikaler Schenkel
- 30: horizontaler Schenkel
- 32: Anlagefläche
- 34: Auflagefläche
- 36: Anlagefläche
- 38: Auflagefläche
- 40: Seitenwandung
- 42: Seitenwand
- 44: Tretlagerantriebsaufnahme
- 100: Fahrradrahmen
- 102: Batteriepack
- 104: Rahmenabschnitt
- 105: Endbereich
- 106: Rahmenmittenebene
- 108: Energiespeichermittenebene
- 110: Stufe
- 112: erste Auflagefläche
- 114: zweite Auflagefläche
- 116: erste Wandfläche
- 118: zweite Wandfläche
- 120: erster Schenkel
- 122: zweiter Schenkel
- 124: Tretlagerantriebsaufnahme
- 200: Rahmenabschnitt
- 202: Batteriepack
- 204: Auflagefläche
- 206: Auflagefläche
- 208: Anlagefläche
- 210: Anlagefläche
- 300: Rahmenabschnitt
- 302: Batteriepack
- 303: Rahmenmittenebene
- 304: Rahmenstützfläche
- 306: Energiespeicherstützfläche
- 308: Stützfläche
- 310: Stützfläche
- 312: Sattelfläche
- 314: Sattelflächen
- 316: Außenfläche
- 318: Außenfläche
- 320: Schrägaußenfläche
- 322: Außenfläche
- 324: Außenfläche
- 400: Fahrradrahmen
- 402: Rahmenabschnitt
- 403: Rahmenmittenebene
- 404: Batteriepack
- 406: Teilungsebene

## Patentansprüche

1. Fahrradrahmen (1, 100, 400) mit einem Energiespeicher (18, 102, 202, 302, 404), insbesondere einem Batteriepack, und zumindest einem Rahmenabschnitt (16, 104, 200, 300, 402) der zur abnehmbaren Halterung des Energiespeichers (18, 102, 202, 302, 404)ausgebildet ist, wobei der zur abnehmbaren Halterung des Energiespeichers (18, 102, 202, 302, 404) ausgebildete Rahmenabschnitt (16, 104, 200, 300, 402) einen bezüglich einer Rahmenmittenebene (24, 106, 303, 403) asymmetrischen Querschnitt aufweist, **dadurch gekennzeichnet, dass** der Rahmenabschnitt (16, 104, 200, 300, 402) einen zumindest abschnittsweise L-förmigen Querschnitt aufweist und dass sich der Querschnitt des Rahmenabschnitts (16, 104, 200, 300, 402) und der Querschnitt des Energiespeichers (18, 102, 202, 302, 404) zu einem rechteckigen Gesamtquerschnitt ergänzen.

2. Fahrradrahmen nach Anspruch 1, wobei das Unterrohr (2) zur Halterung des Energiespeichers (18, 102, 202, 302, 404) ausgebildet ist.

3. Fahrradrahmen nach Anspruch 1 oder 2, wobei der Energiespeicher (18, 102, 202, 302, 404) zumindest abschnittsweise einen bezüglich einer Energiespeichermittenebene (26, 108) asymmetrischen Querschnitt aufweist.

4. Fahrradrahmen nach einem der vorhergehenden Ansprüche, wobei Rahmenabschnitt (16, 104, 200, 300, 402) und Energiespeicher (18, 102, 202, 302, 404) eine im Wesentlichen diagonale Teilungsebene begrenzen.

5. Fahrradrahmen nach einem der vorhergehenden Ansprüche, wobei der Energiespeicher (18, 102, 202, 302, 404) oberhalb des Rahmenabschnitts (16, 104, 200, 300, 402) angeordnet ist.

6. Fahrradrahmen nach einem der vorhergehenden Ansprüche, wobei der Energiespeicher (18, 102) einen zumindest abschnittsweise L-förmigen Querschnitt aufweist.

7. Fahrradrahmen nach einem der Ansprüche 1 bis 5, wobei der Energiespeicher (404) einen zumindest abschnittsweise dreieckigen Querschnitt aufweist.

8. Elektrofahrrad mit einem Fahrradrahmen (1, 100, 400) aufweisend zumindest einen Energiespeicher (18, 102, 202, 302, 404), insbesondere ein Batteriepack, und einen Rahmenabschnitt (16, 104, 200, 300, 402), der zur abnehmbaren Halterung des Energiespeichers (18, 102, 202, 302, 404) ausgebildet ist, wobei der zur abnehmbaren Halterung des Energiespeichers (18, 102, 202, 302, 404) ausgebildete Rahmenabschnitt (16, 104, 200, 300, 402) einen bezüglich einer Rahmenmittenebene (24, 106, 303, 403) asymmetrischen Querschnitt aufweist, **dadurch gekennzeichnet, dass** der Rahmenabschnitt (16, 104, 200, 300, 402) einen zumindest abschnittsweise L-förmigen Querschnitt aufweist und dass sich der Querschnitt des Rahmenabschnitts (16, 104, 200, 300, 402) und der Querschnitt des Energiespeichers (18, 102, 202, 302, 404) zu einem rechteckigen Gesamtquerschnitt ergänzen.

## Claims

1. Bicycle frame (1, 100, 400) having an energy storage device (18, 102, 202, 302, 404), in particular a battery pack, and at least one frame section (16, 104, 200, 300, 402) that is embodied so as to mount the energy storage device (18, 102, 202, 302, 404) in a removable manner, wherein the frame section (16, 104, 200, 300, 402) that is embodied so as to mount the energy storage device (18, 102, 202, 302, 404) in a removable manner comprises an asymmetrical cross section in relation to a frame central plane (24, 106, 303, 403), **characterised in that** the frame section (16, 104, 200, 300, 402) comprises an at least in sections L-shaped cross section and that the cross section of the frame section (16, 104, 200, 300, 402) and the cross section of the energy storage device (18, 102, 202, 302, 404) complete an entire rectangular cross section.

2. Bicycle frame according to claim 1, wherein the lower tube (2) is embodied so as to mount the energy storage device (18, 102, 202, 302, 404).

3. Bicycle frame according to claim 1 or 2, wherein the energy storage device (18, 102, 202, 302, 404) at least in sections comprises an asymmetrical cross section in relation to an energy storage central plane (26, 108).

4. Bicycle frame according to one of the preceding claims, wherein the frame section (16, 104, 200, 300, 402) and energy storage device (18, 102, 202, 302, 404) delimit an essentially diagonal dividing plane.

5. Bicycle frame according to one of the preceding claims, wherein the energy storage device (18, 102, 202, 302, 404) is arranged above the frame section (16, 104, 200, 300, 402) .

6. Bicycle frame according to one of the preceding claims, wherein the energy storage device (18, 102) comprises an at least in sections L-shaped cross section.

7. Bicycle frame according to one of claims 1 to 5, wherein the energy storage device (404) comprises an at least in sections triangular cross section.

8. Electric bicycle having a bicycle frame (1, 100, 400) comprising at least one energy storage device (18, 102, 202, 302, 404), in particular a battery pack, and a frame section (16, 104, 200, 300, 402) that is embodied so as to mount the energy storage device (18, 102, 202, 302, 404) in a removable manner, wherein the frame section (16, 104, 200, 300, 402) that is embodied so as to mount the energy storage device (18, 102, 202, 302, 404) in a removable manner comprises an asymmetrical cross section in relation to a frame central plane (24, 106, 303, 403), **characterised in that** the frame section (16, 104, 200, 300, 402) comprises an at least in sections L-shaped cross section and that the cross section of the frame section (16, 104, 200, 300, 402) and the cross section of the energy storage device (18, 102, 202, 302, 404) complete an entire rectangular cross section.

## Revendications

1. Cadre de bicyclette (1, 100, 400) comportant un accumulateur d'énergie (18, 102, 202, 302, 404), en particulier un bloc-batterie, et au moins une partie de cadre (16, 104, 200, 300, 402), qui est conçue pour maintenir de manière amovible l'accumulateur d'énergie (18, 102, 202, 302, 404), la partie de cadre (16, 104, 200, 300, 402) conçue pour maintenir de manière amovible l'accumulateur d'énergie (18, 102, 202, 302, 404) présentant une section transversale asymétrique par rapport à un plan médian de cadre (24, 106, 303, 403), **caractérisé en ce que** la partie de cadre (16, 104, 200, 300, 402) présente une section transversale au moins en partie en forme de L et **en ce que** la section transversale de la partie de cadre (16, 104, 200, 300, 402) et la section transversale de l'accumulateur d'énergie (18, 102, 202, 302, 404) se complètent pour former une section transversale globale rectangulaire.

2. Cadre de bicyclette selon la revendication 1, dans lequel le tube inférieur (2) est conçu pour maintenir l'accumulateur d'énergie (18, 102, 202, 302, 404).

3. Cadre de bicyclette selon la revendication 1 ou 2, dans lequel l'accumulateur d'énergie (18, 102, 202, 302, 404) présente, au moins en partie, une section transversale asymétrique par rapport à un plan médian d'accumulateur d'énergie (26, 108).

4. Cadre de bicyclette selon l'une des revendications précédentes, dans lequel la partie de cadre (16, 104, 200, 300, 402) et l'accumulateur d'énergie (18, 102, 202, 302, 404) limitent un plan de division sensiblement diagonal.

5. Cadre de bicyclette selon l'une des revendications précédentes, dans lequel l'accumulateur d'énergie (18, 102, 202, 302, 404) est disposé au-dessus de la partie de cadre (16, 104, 200, 300, 402).

6. Cadre de bicyclette selon l'une des revendications précédentes, dans lequel l'accumulateur d'énergie (18, 102) présente une section transversale au moins en partie en forme de L.

7. Cadre de bicyclette selon l'une des revendications 1 à 5, dans lequel l'accumulateur d'énergie (404) présente une section transversale au moins en partie triangulaire.

8. Bicyclette électrique comprenant un cadre de bicyclette (1, 100, 400) comportant au moins un accumulateur d'énergie (18, 102, 202, 302, 404), en particulier un bloc-batterie, et une partie de cadre (16, 104, 200, 300, 402), qui est conçue pour maintenir de manière amovible l'accumulateur d'énergie (18, 102, 202, 302, 404), la partie de cadre (16, 104, 200, 300, 402) conçue pour maintenir de manière amovible l'accumulateur d'énergie (18, 102, 202, 302, 404) présentant une section transversale asymétrique par rapport à un plan médian de cadre (24, 106, 303, 403), **caractérisée en ce que** la partie de cadre (16, 104, 200, 300, 402) présente une section transversale au moins en partie en forme de L et **en ce que** la section transversale de la partie de cadre (16, 104, 200, 300, 402) et la section transversale de l'accumulateur d'énergie (18, 102, 202, 302, 404) se complètent pour former une section transversale globale rectangulaire.
